# EUROPEAN PATENT APPLICATION

(11) **EP 2 101 074 A2**
(43) Date of publication of application: **16.09.2009**
(21) Application number: 09003113.9
(22) Date of filing: 04.03.2009
(51) Int. Cl.: F16D 48/06, F16H 61/18

(54) **Clutch-by-wire system**

(30) Priority: 13.03.2008 JP 2008063797
(71) Applicant: Aisin Seiki Kabushiki Kaisha, Kariya-shi, Aichi 448-8650 (JP)
(72) Inventor: Oda, Naochika, Kariya-shi Aichi-ken, 448-8650 (JP); Taguchi, Yoshinori, Kariya-shi Aichi-ken, 448-8650 (JP)
(74) Representative: Kramer - Barske - Schmidtchen

(57) **Abstract**

A clutch-by-wire system includes an automatic clutch (20), including a clutch (21) connected to an engine (10) and a clutch actuator (23) operating engagement and disengagement of the clutch (21), an automated transmission (30), connected to the engine (10) via the clutch (21) and including a shift actuator (34, 35, 36) operating to shift gear stages, a clutch pedal sensor (41), detecting a depressing amount of a clutch pedal, a shift sensor (42), detecting an operation of a shift lever, and a transmission control device (60), automatically controlling an operation of the clutch actuator (23) and an operation of the shift actuator (34, 35, 36) in an automatic transmission mode and controlling the operation of the clutch actuator (23) and the operation of the shift actuator (34, 35, 36) on the basis of signals from at least the clutch pedal sensor (41) and the shift sensor (42) in a manual transmission mode.

## Description

### FIELD OF THE INVENTION

The present invention relates to a clutch-by-wire system, having an automatic clutch and a transmission control device controlling an automated transmission. More specifically, the present invention relates to a clutch-by wire-system, in which a manual shift mode and an automatic shift mode are selectively operated.

### BACKGROUND

A vehicle is known in which an automatic shift mode and a manual shift mode are selectively operated in a single vehicle according to a request from a driver. Such vehicle includes a clutch-by-wire system, in which an engine is connected to an automated transmission via an automatic clutch, the automatic clutch and the automated transmission are controlled by a transmission control device, and the automatic shift mode and the manual shift mode are selectively operated by the transmission control device.

A known clutch-by-wire system is disclosed in JP2005-214370A (which will be referred to as reference 1 hereinbelow). According to reference 1, a control device of a vehicle power train includes a clutch-by-wire means and a clutch-by-wire control means. The control device of the power train includes a transmission portion, which changes speed of an output of an engine and thereby transmitting the output to a driving wheel side of a vehicle. A mode is selectable in the transmission portion from between an automatic mode and a manual mode. The clutch-by-wire means is configured to electrically control a connection degree of a clutch on the basis of a clutch pedal operation by a driver. The cultch is provided at a power transmission path between the engine and driving wheels. The clutch-by-wire control means turns on a clutch-connection-degree control when the transmission portion is in the manual mode while the clutch-by-wire control means turns off the clutch-connection-degree control when the transmission portion is in the automatic mode. Consequently, for example, a request that a husband wants to drive a manual transmission vehicle while his wife wants to drive an automatic transmission vehicle, or a request for a manual transmission vehicle in normal driving conditions while for an automatic transmission vehicle in congested traffic conditions is met.

According to the control device of the vehicle power train in reference 1, both an easy drive and a sport drive relative to a clutch pedal operation at the time of starting and shifting are compatible in the manual mode. However, a relationship between the clutch pedal operation and a shift lever operation is not mentioned in reference 1. Therefore, the clutch pedal operation and the shift lever operation in the control device according to reference 1 are the same as that of a conventional manual transmission. In other words, operations of a clutch pedal (a left-foot operation), an accelerator pedal (a right-foot operation), a shift lever (a right-hand operation) and a steering wheel (a left-hand operation) need to be linked and operated at appropriate timings ("right-hand" and "left-hand" herein corresponds to a vehicle having a steering wheel on a left side thereof). Accordingly, a target is limited to drivers who enjoy driving the manual transmission vehicle. When a driver, who is not used to the clutch pedal operation and the shift lever operation, operates the clutch pedal and the shift lever, gears may be shifted when a clutch is still engaged, and thereby the transmission portion may be damaged. Further, when the gears are shifted at a curve of a road in the manual mode, the driver operates the shift lever with a right hand and operates the steering wheel with a left hand. Therefore, the vehicle is driven with only one hand. As a result, driving safety may be reduced according to the known clutch-by-wire system disclosed in reference 1.

A need thus exits for a clutch-by-wire system, in which a transmission is protected and driving safety is improved in a manual transmission mode.

### SUMMARY OF THE INVENTION

According to an aspect of the present invention, a clutch-by-wire system includes an automatic clutch, including a clutch connected to an engine and a clutch actuator operating engagement and disengagement of the clutch, an automated transmission, connected to the engine via the clutch and including a shift actuator operating to shift gear stages, a clutch pedal sensor, detecting a depressing amount of a clutch pedal, a shift sensor, detecting an operation of a shift lever, and a transmission control device, automatically controlling an operation of the clutch actuator and an operation of the shift actuator in an automatic transmission mode and controlling the operation of the clutch actuator and the operation of the shift actuator on the basis of signals from at least the clutch pedal sensor and the shift sensor in a manual transmission mode.

According to a further aspect of the present invention, the transmission control device memorizes an upshift operation or a downshift operation when the shift lever is operated, the transmission control device restricts shifting when a stroke of the clutch actuator is closer to an engaged side than the threshold value and controls the shift actuator to operate shifting in accordance with the memorized operation when the stroke of the clutch actuator is equal to the threshold value or closer to a disengaged side than the threshold value in the manual transmission mode.

According to a further aspect of the present invention, the transmission control device controls the clutch actuator so that the stroke of the clutch actuator is maintained to be a clutch disengaged position of a shifting start time or to a position closer to the disengaged side than the clutch disengaged position of the shifting start time when the automated transmission is shifting in the manual transmission mode.

According to a further aspect of the present invention, the clutch-by-wire system further includes a vehicle state detecting sensor. The transmission control device controls the depressing amount of the clutch pedal corresponding to the threshold value to vary in accordance with the vehicle state detected by the sensor in the manual transmission mode.

According to a further aspect of the present invention, the vehicle state detecting sensor is at least one of an engine rotational number sensor detecting a rotational number of the engine, an accelerator pedal sensor detecting a depressing amount of an accelerator pedal, a vehicle speed sensor detecting a vehicle speed and an output shaft rotational number sensor detecting a rotational number of an output shaft of the automatic transmission.

According to a further aspect of the present invention, the transmission control device controls each stroke of the clutch pedal and the clutch actuator so that each entire stroke thereof is used when the vehicle speed is lower than a predetermined value and the transmission control device controls the stroke of the clutch pedal to be shortened when the vehicle speed is equal to or higher than the predetermined value in the manual transmission mode.

According to a further aspect of the present invention, the transmission control device displays on the display device that a required shift position and an actual shift position are not equal when the required shift position, in which an operation of the shift lever is memorized, and the actual shift position of the automated transmission are not equal in the manual transmission mode.

According to a further aspect of the present invention, the transmission control device indicates the required shift position by flashing on the display device when the required shift position and the actual shift position are not equal in the manual transmission mode.

According to a further aspect of the present invention, the automated transmission is one of a parallel axis gear transmission, a planetary gear transmission and a continuously variable transmission.

According to a further aspect of the present invention, the clutch is one of a dry clutch, an electromagnetic clutch and a wet clutch.

According to a further aspect of the present invention, the threshold value is a value defining a position corresponding to the clutch actuator stroke at the disengaged side so as not to interfere with shifting of the automated transmission.

According to a further aspect of the present invention, the actual shift position is indicated by lighting on the display device when the required shift position and the actual shift position are equal.

According to a further aspect of the present invention, the required shift position is indicated by flashing on the display device from when a shift operation of the gear stages is started by the shift actuator to when the shift operation of the gear stages to the required shift position is completed.

Accordingly, the automated transmission is prevented from being shifted in a state where the automatic clutch is in the engaged state in the manual transmission mode. Therefore, the automated transmission is prevented from being damaged, thereby being protected. Further, accordingly, timing of shifting is determined on the basis of timing of depressing the clutch pedal in the manual transmission mode. Therefore, the driver may surely keep both hands on a steering wheel when shifting. Therefore, driving safety is improved.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a schematic diagram schematically illustrating a configuration of a clutch-by-wire system according to an embodiment;

Fig. 2 is a flow chart schematically illustrating an operation of the clutch-by-wire system according to the embodiment;

Fig. 3 is a timing chart schematically illustrating a first example of the operation of the clutch-by-wire system according to the embodiment;

Fig. 4 is a timing chart schematically illustrating a second example of the operation of the clutch-by-wire system according the embodiment;

Fig. 5 is a schematic diagram schematically illustrating a relationship between a clutch pedal stroke and a clutch actuator stroke at a high speed and a low speed in the clutch-by-wire system according to the embodiment;

Fig. 6 is a timing chart schematically illustrating a display change on a display device at the time of shifting in the clutch-by-wire system according to the embodiment; and

Fig. 7 is a timing chart schematically illustrating the display change on the display device at the time of canceling shifting in the clutch-by-wire system according to the embodiment.

### DETAILED DESCRIPTION

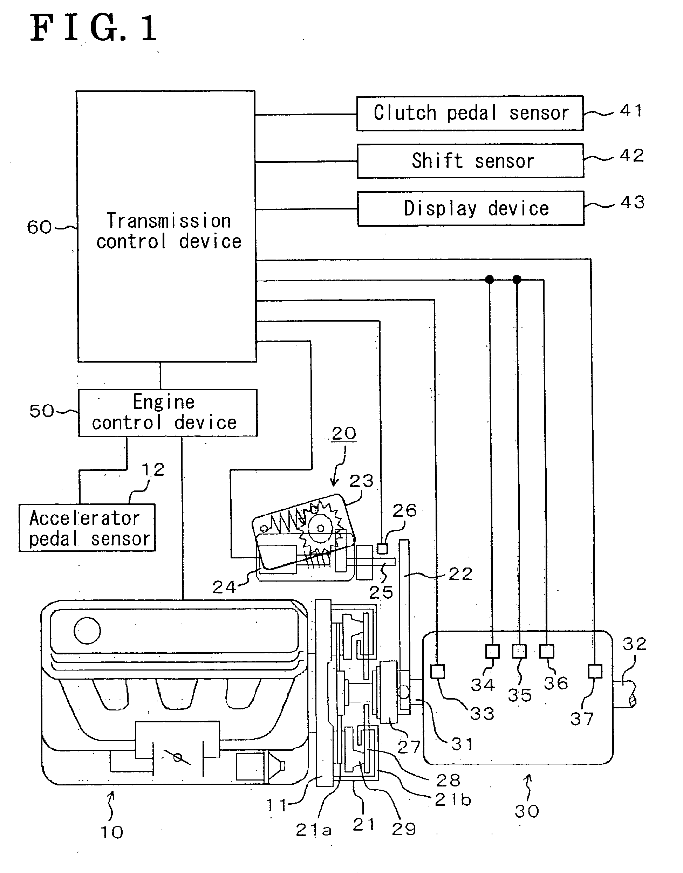

A clutch-by-wire system includes an automatic clutch 20 (see Fig. 1), an automated transmission 30 (see Fig. 1), a clutch pedal sensor 41 (see Fig. 1), a shift sensor 42 (see Fig. 1) and a transmission control device 60 (see Fig. 1). The automatic clutch 20 (see Fig. 1) includes a clutch 21 (see Fig. 1), which is connected to an engine 10 (see Fig. 1), and a clutch actuator 21 (see Fig. 1), which operates engagement and disengagement of the clutch 21 (see Fig. 1). The automated transmission 30 (see Fig. 1) is connected to the engine 10 (see Fig. 1) via the clutch 21 (see Fig. 1). The automated transmission 30 (see Fig. 1) includes shift actuators 34, 35 and 36 (see Fig. 1), which operate gear shifting. The clutch pedal sensor 41 (see Fig. 1) detects a clutch pedal depressing amount. The shift sensor 42 (see Fig. 1) detects a shift lever operation. The transmission control device 60 (see Fig. 1) automatically controls operation of the clutch actuator 23 (see Fig. 1) and the shift actuators 34, 35 and 36 (see Fig. 1) in an automatic transmission mode. The transmission control device 60 (see Fig. 1) controls operation of the clutch actuator 23 (see Fig. 1) and the shift actuators 34, 35 and 36 (see Fig. 1) on the basis of signals from at least the clutch pedal sensor 41 (see Fig. 1) and the shift sensor 42 (see Fig. 1) in a manual transmission mode.

An embodiment of the clutch-by-wire system will be described hereinbelow with reference to the attached drawings. Fig. 1 is a schematic diagram schematically illustrating a configuration of the clutch-by-wire system according to the embodiment.

In the clutch-by-wire system, the automatic clutch 20 is attached to a flywheel 11, which rotates integrally with an output shaft (a crank shaft) of the engine (an internal combustion engine) 10. The automated transmission 30 is connected to the flywheel 11 via the automatic clutch 20. The engine 10 is controlled by an engine control device 50.

The automatic clutch 20 includes a friction clutch 21 (a clutch) of a mechanical type (a dry single-plate type), a clutch lever 22 and the clutch actuator 23. Not only a dry clutch but also an electromagnetic clutch, a wet clutch, and the like may be adapted as the automatic clutch 20.

The clutch actuator 23 operates a rotational transmission, which is achieved by the friction clutch 21, via the clutch lever 22.

The friction clutch 21 includes a clutch disc 21 a. The clutch disc 21a is provided to face the flywheel 11. The clutch disc 21a rotates integrally with an input shaft 31 of the automated transmission 30. The friction clutch 21 varies the rotational transmission, that is a clutch torque, between the flywheel 11 and the clutch disc 21a (between the output shaft of the engine 10 and the input shaft 31 of the automated transmission 30) by varying a contact pressure of the clutch disc 21a relative to the flywheel 11.

The clutch actuator 23 includes a direct current electric motor 24. The clutch actuator 23 moves the clutch lever 22 by driving the motor 24 so as to move (advance and retract) a rod 25 in front and rear directions thereof ("front" and "rear" of the rod 25 corresponds to a right side and a left side in Fig. 1, respectively). Consequently, the clutch actuator 23 thrusts a release bearing 27 via the clutch lever 22 and thereby generates the contact pressure at a pressure plate 29 by deforming a diaphragm spring 28. The pressure plate 29 is supported at a cover 21b of the friction clutch 21, which rotates integrally with the flywheel 11. By moving the clutch lever 22 via the rod 25, the clutch actuator 23 varies the contact pressure of the clutch disc 2 1 a relative to the flywheel 11 and thereby operates the rotational transmission, which is achieved by the friction clutch 21.

More specifically, the contact pressure of the clutch disc 2 1 a relative to the flywheel 11 is reduced when the rod 25 is moved (advanced) in the front direction thereof and the clutch lever 22 is thrust in a right direction in Fig. 1. On the other hand, the contact pressure of the clutch disc 21 a relative to the flywheel 11 is increased when the rod 25 is moved (retracted) in the rear direction thereof and the clutch lever 22 is released.

A relationship between a moving position of the rod 25 and the rotational transmission, which is achieved by the friction clutch 21, will be described hereinbelow. When the rod 25 is moved (advanced) in the front direction thereof, ultimately substantially no contact pressure of the clutch disc 21 a relative to the flywheel 11 exists. At such time, the flywheel 11 and the clutch disc 21a are spaced away from each other and the rotational transmission therebetween is not achieved. The state in which the rotational transmission is not achieved is defined as a clutch disengaged state (a disengaged state). A position at which the rod 25 is positioned at such time is defined as a stand-by point. A moving amount of the rod 25, which corresponds to a position of the rod 25, is defined as a clutch stroke (a clutch actuator stroke) serving as a control amount.

When the rod 25 is moved (retracted) from the stand-by point in the rear direction thereof, the contact pressure of the clutch disc 2 1 a relative to the flywheel 11 is increased in accordance with the moving amount of the rod 25. A difference in the rotational number (a slip amount) between the flywheel 11 and the clutch disc 2 1 a according to the level of contact pressure exists when the rotational transmission therebetween is achieved. When substantially no difference in the rotational number (the slip amount) exists between the flywheel 11 and the clutch disc 21a by an increase of the contact pressure according to movement (retraction) of the rod 25, the flywheel 11 and the clutch disc 2 1 a are synchronously rotated. The state in which the flywheel 11 and the clutch disc 21a are synchronously rotated is defined as a complete clutch engaged state. When the flywheel 11 and the clutch disc 2 1 a are synchronously rotated, a position at which the rod 25 is positioned is defined as a complete engaged point. The slip amount between the flywheel 11 and the clutch disc 21a is controlled by controlling the moving amount (the clutch stroke) of the rod 25 from the stand-by point to a position at the time of synchronization (the complete engaged point) by means of the clutch actuator 23. A state in which the moving amount (the clutch stroke) of the rod 25 is within a range between the stand-by point and the complete engaged point and in which the flywheel 11 and the clutch disc 21a slip relative to each other is a partial clutch engaged state. A state of the partial clutch state including the complete engaged state is defined as a clutch engaged state.

A stroke sensor 26 is provided at the automatic clutch 20. The stroke sensor 26 detects a clutch stroke St, which corresponds to the moving amount of the rod 25 by means of the clutch actuator 23. The clutch stroke St is used to determine a state of the rotational transmission by means of the friction clutch 21.

The automated transmission 30 is, for example, a parallel axis gear transmission having five forward movement shift stages and one reverse movement shift stage. The automated transmission 30 includes the input shaft 31, an output shaft 32 and a plurality of gear sets. The input shaft 31 of the automated transmission 30 is connected to the clutch disc 2 1 a of the friction clutch 21 so as to transmit a torque therebetween. The output shaft 32 of the automated transmission 30 is connected to an axle so as to transmit a torque therebetween. An input shaft rotational number sensor 33 is provided at the input shaft 31. The input shaft rotational number sensor 33 detects a rotational number (an input shaft rotational number Ni) of the input shaft 31. An output shaft rotational number sensor 37 (a sensor) is provided at the output shaft 32. The output shaft rotational number sensor 37 detects a rotational number (an output shaft rotational number No) of the output shaft 32. The automated transmission 30 further includes the shift actuators 34, 35 and 36. The shift actuators 34, 35 and 36 shift the gear sets (the gear stages), which are configured to transmit a torque. The automated transmission 30 shifts gear stages to a required gear stage by driving the shift actuators 34, 35 and 36. The automated transmission 30 is not limited to the parallel axis gear transmission. A planetary gear type transmission, which hydraulically shifts gear stages to a required gear stage by using a plurality of planetary gears, a brake, a clutch and a solenoid valve, and a continuously variable transmission, which continuously infinitely varies a gear ratio, may be adapted as the automated transmission 30.

The engine control device 50 controls the engine 10. The engine control device 50 collects information, which is necessary to control the engine 10 and which relates to an engine operational state (an accelerator pedal angle from an accelerator pedal sensor 12 (a sensor), an engine rotational number Ne from an engine rotational number sensor (a sensor), an on-off state of an ignition switch, and the like). Then, the engine control device 50 executes a calculation according to a predetermined program and thereby controls actuators of injector and igniter, and the like. The engine control device 50 is electrically connected to a transmission control device 60. The engine control device 50 is configured to provide information necessary in the transmission control device 60 (the engine rotational number Ne, the accelerator pedal angle, and the like).

The transmission control device 60 is a computer, which controls the automatic clutch 20 and the automated transmission 30. The transmission control device 60 collects information, which is necessary to control the automatic clutch 20 and the automated transmission 30 and which relates to an operational state (a clutch pedal stroke from the clutch pedal sensor 41, a shift position from the shift sensor 42, the input shaft rotational number Ni from the input shaft rotational number sensor 33, the output shaft rotational number No from the output shaft rotational number sensor 37, the clutch actuator stroke from the stroke sensor 26, the engine rotational number Ne from the engine control device 50, and the like). Then, the transmission control device 60 executes a calculation according to a predetermined program, thereby controlling the clutch actuator 23 and the shift actuators 34, 35 and 36 and displaying predetermined information on a display device 43. The transmission control device 60 automatically controls an operation of the clutch actuator 23 and operations of the shift actuators 34, 35 and 36 in the automatic transmission mode. The transmission control device 60 controls the operation of the clutch actuator 23 and the operations of the shift actuators 34, 35 and 36 on the basis of signals from at least the clutch pedal sensor 41 and the shift sensor 42 in the manual transmission mode. The transmission control device 60 is electrically connected to sensors, such as the stroke sensor 26, the input shaft rotational number sensor 33, the output shaft rotation sensor 37, the clutch pedal sensor 41, the shift sensor 42, and the like. Further, the transmission control device 60 is electrically connected to the clutch actuator 23, the shift actuators 34, 35 and 36, the display device 43 and the engine control device 50.

The transmission control device 60 adjusts the rotational transmission, which is achieved by the friction clutch 21, by driving the clutch actuator 23. Consequently, the rotational transmission according to a vehicle state, which is achieved by the friction clutch 21, is automatically adjusted. The transmission control device 60 shifts the gear sets (the shift stages) of the automated transmission 30, which transmit the rotational torque, by driving the shift actuators 34, 35 and 36. Consequently, the shift stages of the automated transmission 30 according to the vehicle state are automatically controlled. A detailed operation of the transmission control device 60 will be described hereinbelow.

The accelerator pedal sensor 12 detects a depressing amount (a stroke) of an accelerator pedal of a driver seat. The accelerator pedal sensor 12 is electrically connected to the engine control device 50.

The clutch pedal sensor 41 detects a position (a stroke) of the clutch pedal of the driver seat. The clutch pedal sensor 41 is electrically connected to the transmission control device 60.

The shift sensor 42 detects an operation of a shift lever of the driver seat. The shift sensor 42 is electrically connected to the transmission control device 60.

The display device 43 displays predetermined information. The display device 43 is electrically connected to the transmission control device 60. The display device 43 is provided at an instrument panel of the driver seat, or the like.

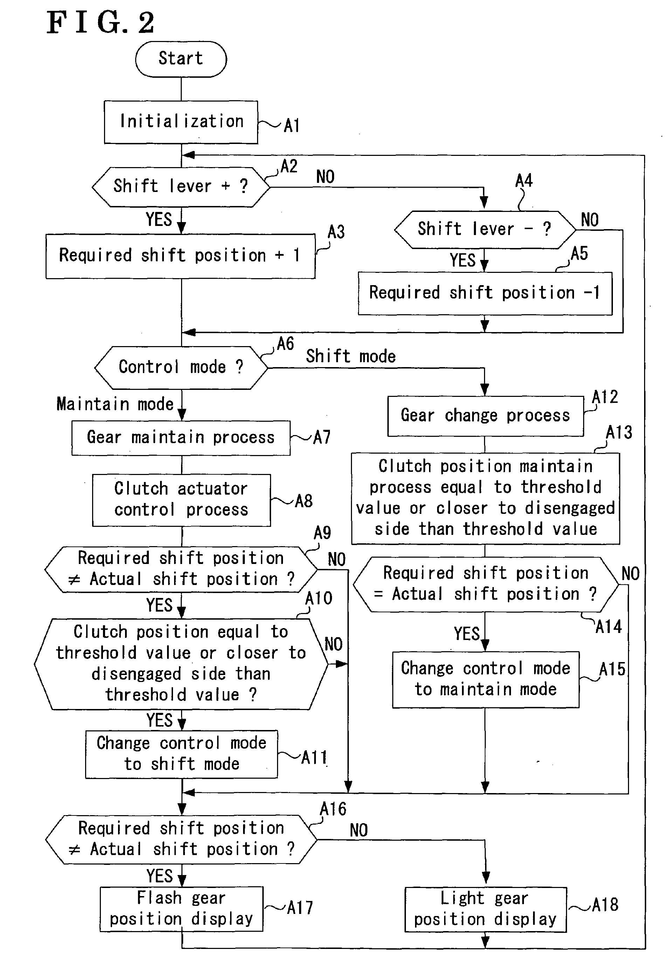

An operation of the clutch-by-wire system according to the embodiment will be described hereinbelow with reference to the attached drawings. Fig. 2 is a flow chart schematically illustrating the operation of the clutch-by-wire system according to the embodiment.

The transmission control device 60 (see Fig. 1) initializes necessary variables (a required shift position, an actual shift position and a control mode) (Step A1). The actual shift position is a gear stage, which is currently engaged. The required shift position is a gear stage, which is selected by a driver's operation of the shift lever and which is memorized by the transmission control device. The control mode is a variable for selecting a maintain mode and a shift mode in Step A6. The maintain mode is a mode maintaining a gear stage. The shift mode is a mode shifting a gear stage. When an initialization is executed, the required shift position is "1", the actual shift position is "1", and the control mode is "the maintain mode".

When the driver operates the shift lever, the transmission control device 60 (see Fig. 1) determines whether or not the shift lever is operated to "+" (Step A2). "+" herein represents an upshift operation. When the shift lever is not operated to "+" (Step A2 NO), a process proceeds to Step A4.

When the shift lever is operated to "+" (Step A2 YES), the transmission control device 60 (see Fig. 1) adds +1 to a value of the required shift position and memorizes the value (Step A3). When the forward movement shift stages of the automated transmission 30 (see Fig. 1) are five shift stages, a limit of the required shift position is 5. Subsequently, the process proceeds to Step A6.

When the shift lever is not operated to "+" (Step A2 No), the transmission control device 60 (see Fig. 1) determines whether or not the shift lever is operated to "-" (Step A4). "-" herein represents a downshift operation. When the shift lever is not operated to "-" (Step A4 NO), the process proceeds to Step A6.

When the shift lever is operated to "-" (Step A4 YES), the transmission control device 60 (see Fig. 1) adds "-1" to the value of the required shift position and memorizes the value (Step A5). A limit of the required shift position is 1. Subsequently, the process proceeds to Step A6.

After Step A3 or Step A5, or when Step A4 is NO, the transmission control device 60 (see Fig. 1) determines whether the control mode is the maintain mode or the shift mode (Step A5). When the control mode is the shift mode, the process proceeds to Step A12.

When the control mode is the maintain mode, the transmission control device 60 (see Fig. 1) executes a maintaining operation of the gear stage of the automated transmission 30 (see Fig. 1) (Step A7).

After Step A7, the transmission control device 60 (see Fig. 1) executes controlling of the clutch actuator 23 (see Fig. 1) on the basis of the depressing amount of the clutch pedal by the driver (Step A8). Step A7 is a process for controlling a gear ratio of the automated transmission 30 (see Fig. 1). An automated manual transmission is adapted as the automated transmission 30 in the embodiment. An automatic transmission (AT), a continuously variable transmission (CVT) or an automated transmission, in which at least a part of a transmission operation is operated automatically, may be adapted, instead.

After Step A8, the transmission control device 60 (see Fig. 1) determines whether or not the required shift position and the actual shift position are unequal to each other (Step A9). When the required shift position and the actual shift position are not unequal to each other (Step 9 NO), the process proceeds to step A16. Step A8 is a process for controlling clutch engagement and disengagement. In the embodiment, the clutch engagement and disengagement are controlled by the clutch actuator 23 (see Fig. 1) of the friction clutch 21 (see Fig. 1). Instead, the electromagnetic clutch or the wet clutch may me adapted.

When the required shift position and the actual shift position are unequal to each other (Step A9 YES), the transmission control device 60 (see Fig. 1) determines whether or not the clutch pedal is depressed so that a clutch position (the clutch actuator stroke) is equal to a threshold value or closer to a disengaged side than a threshold value (Step A10). When the clutch position is not equal to the threshold value or is not closer to the disengaged side than the threshold value (Step A10 NO), the process proceeds to Step A 16. The threshold value is a value defining a position corresponding to the clutch actuator stroke at the disengaged side so as not to at least interfere with shifting of the automated transmission 30 (see Fig. 1). When the clutch actuator stroke is positioned equal to the threshold value or closer to the disengaged side than the threshold value, the transmission of the automated transmission 30 (see Fig. 1) is not interfered.

When the clutch position is equal to the threshold value or closer to the disengaged side than the threshold value (Step A10 YES), the transmission control device 60 (see Fig. 1) changes the control mode from the maintain mode to the shift mode. Subsequently, the process proceeds to Step A16.

When the control mode is the shift mode in Step A6, the transmission control device 60 (see Fig. 1) executes gear changing (Step A12). Step A12 is a process controlling the gear ratio of the automated transmission 30 (see Fig. 1). An automated manual transmission is adapted as the automated transmission 30 in the embodiment.
An automatic transmission (AT), a continuously variable transmission (CVT) or an automated transmission, in which at least a part of transmission operation is operated automatically, may be adapted, instead.

After Step A12, the transmission control device 60 (see Fig. 1) executes a process for maintaining the clutch position at (the clutch actuator stroke to be) a position equal to the threshold value or closer to the disengaged side than the threshold value, regardless of depressing of the clutch pedal (Step A13). Step A13 is a process for controlling the clutch engagement and disengagement. The friction clutch 21 (see Fig. 1) is controlled by the clutch actuator 23 (see Fig. 1) in the embodiment. However, the electromagnetic clutch or the wet clutch may be adapted instead of the friction clutch 21.

0 0 4 2 After Step A13, the transmission control device 60 (see Fig. 1) determines whether or not the required shift position and the actual shift position are equal to each other (Step A14). When the required shift position and the actual shift position are not equal to each other (Step A 14 NO), the process proceeds to the Step A 16.

When the required shift position and the actual shift position are equal to each other (Step A14 YES), the transmission control device 60 (see Fig. 1) changes the control mode from the shift mode to the maintain mode (Step A15). Subsequently, the process proceeds to Step A 16.

When Step A9, Step A10 or Step A 14 is NO or after Step A11 or Step A 15, the transmission control device 60 (see Fig. 1) determines whether or not the required shift position and the actual shift position are unequal to each other (Step A16).

When the required shift position and the actual shift position are unequal to each other (Step A16 YES), the transmission control device 60 (see Fig. 1) executes a process for flushing the gear stage display on the display device 43 (see Fig. 1) (Step A17). Subsequently, the process returns to Step A2.

When the required shift position and the actual shift position are not unequal to each other (Step A16 NO), the transmission control device 60 (see Fig. 1) executes a process for lighting the gear stage display on the display device 43 (see Fig. 1) (Step A18). Subsequently, the process returns to Step A2.

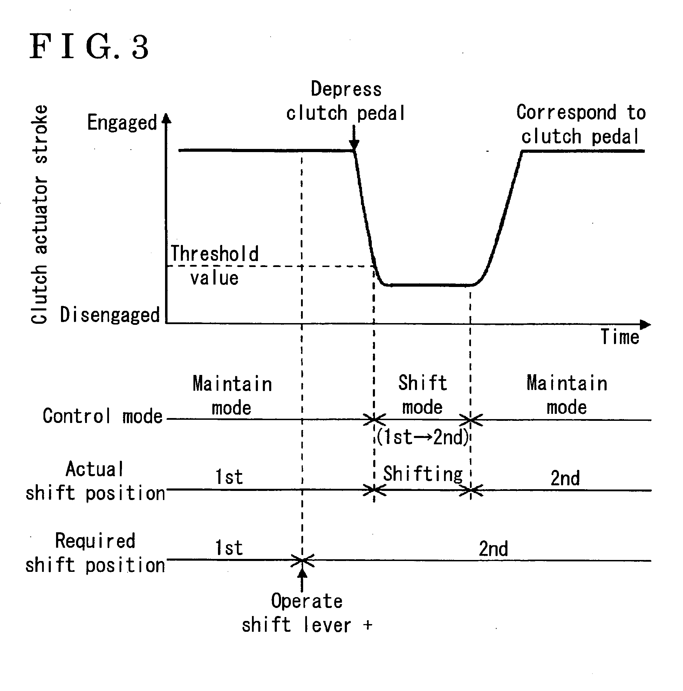

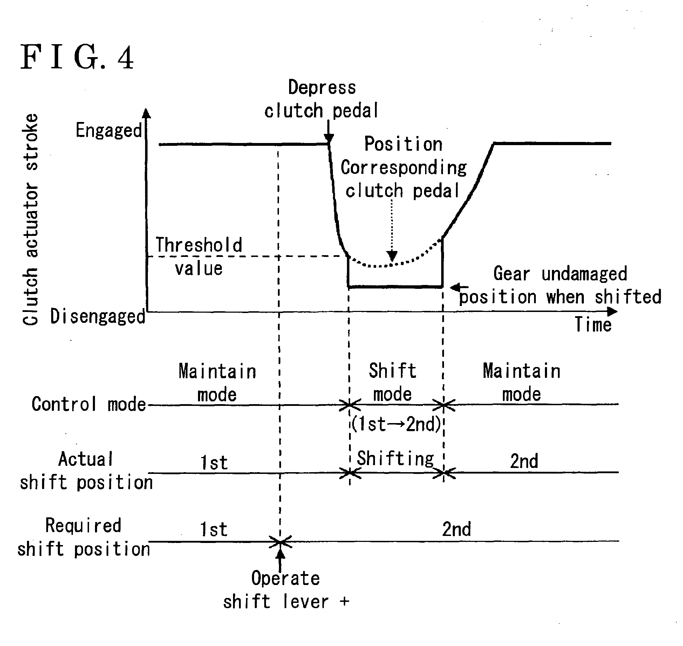

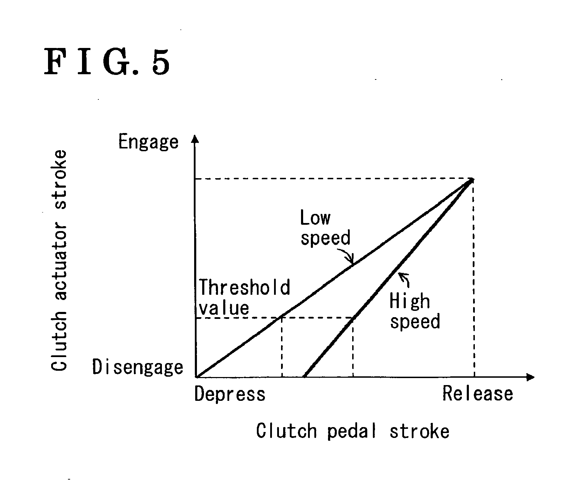

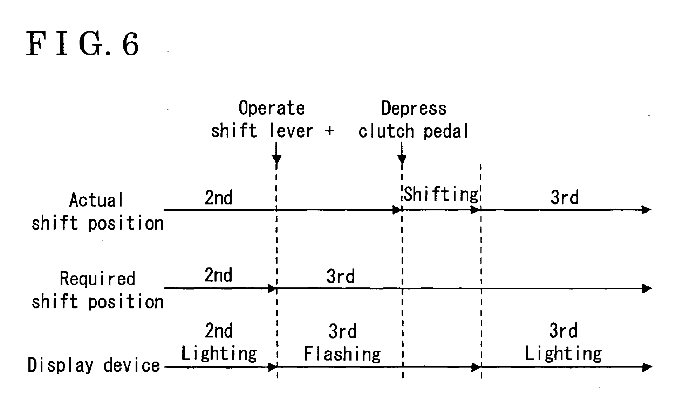

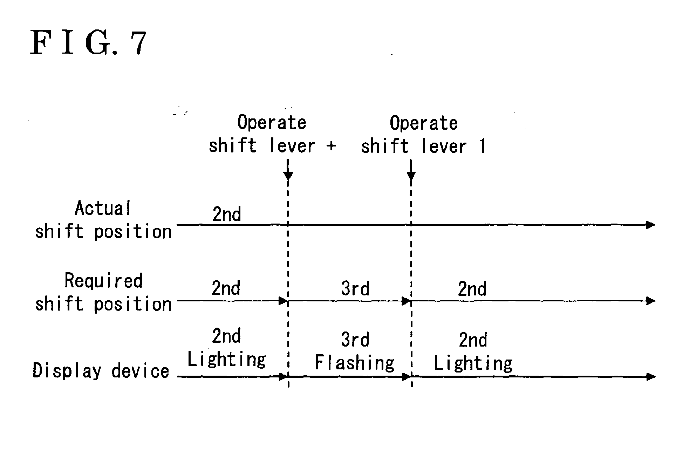

The operation of the clutch-by-wire system according to the embodiment will be described hereinbelow with reference to examples and the attached drawings. Fig. 3 is a timing chart schematically illustrating a first example of the operation of the clutch-by-wire system according to the embodiment. Fig. 4 is a timing chart schematically illustrating a second example of the operation of the clutch-by-wire system according the embodiment. Fig. 5 is a schematic diagram schematically illustrating a relationship between a clutch pedal stroke and a clutch actuator stroke at the time of a high speed and a low speed in the clutch-by-wire system according to the embodiment. Fig. 6 is a timing chart schematically illustrating a display change on a display device at the time of shifting in the clutch-by-wire system according to the embodiment. Fig. 7 is a timing chart schematically illustrating the display change on the display device at the time of canceling shifting in the clutch-by-wire system according to the embodiment.

As illustrated in Fig. 3, the required shift position is changed to 2nd (Step A3 in Fig. 2) when the shift lever is operated to "+" (Step A2 YES in Fig. 2) in a state where the control mode is the maintain mode, the actual shift position is 1 st, the required shift position is 1st and a clutch is in an engaged state. However, the control mode is the maintain mode (the maintain mode in Step A6 in Fig. 2). Therefore, the gear stage is maintained (Step A7 in Fig. 2). Subsequently, when the clutch pedal is depressed, the clutch actuator 23 strokes in accordance with the depressing amount of the clutch pedal (Step A8 in Fig. 2). At the beginning of depressing of the clutch pedal, however, the actual shift position is in 1 st and the required shift position is in 2nd. Therefore, the actual shift position and the required shift position are unequal to each other (Step A9 in Fig. 2). Then, when the clutch pedal is further depressed so that the clutch actuator stroke is positioned to be equal to the threshold value or closer to the disengaged side than the threshold value (Step A10 YES in Fig. 2), the control mode is changed to the shift mode (Step A11 in Fig. 2). After the control mode is changed to the shift mode, gear changing is executed (Step A12 in Fig. 2). Even when the depressing amount of the clutch pedal is decreased during shifting (from when engagement of a current gear is released to when engagement of a required gear is achieved), as illustrated in Fig. 4, the clutch actuator stroke is forced to stroke into a position in which gears are not damaged (Step A13 in Fig. 2). When shifting is completed and the actual shift position and the required shift position are in 2nd and equal to each other (Step A14 YES in Fig. 2), the control mode is changed to the maintain mode (Step A15 in Fig. 2).

As illustrated in Fig. 5, in a clutch actuator controlling process (Step A8 in Fig. 2), the transmission control device 60 (see Fig. 1) controls each stroke of the clutch pedal and the clutch actuator 23 on the basis of the vehicle state (a rotational number of each member such as the engine rotational number Ne from the engine control device 50 (see Fig. 1), the depressing amount of the accelerator pedal from the accelerator pedal sensor 12 (see Fig. 1), a vehicle speed from a vehicle speed sensor (a sensor), the output shaft rotational number No from the output shaft rotational number sensor 37 (see Fig. 1) and the like). More specifically, the transmission control device 60 (see Fig. 1) uses each entire stroke of the clutch pedal and the clutch actuator stroke 23 at a low speed (a speed lower than a predetermined value) so that the automatic clutch is easily controlled. The transmission control device 60 (see Fig. 1) shortens the stroke of the clutch pedal at a high speed (a speed equal to or higher than the predetermined value) so as to achieve a quick-response operational feeling.

As illustrated in Fig. 6, when the actual shift position and the required shift position are in 2nd and equal to each other (Step A16 NO in Fig. 2), a gear position is indicated by "lighting" "2nd" on the display device 43 (see Fig. 1) (Step A18 in Fig. 2). Subsequently, when the shift lever is operated to "+" (Step A2 YES in Fig. 2) and the required shift position is changed to 3rd (Step A3 in Fig. 2), the actual shift position in 2nd and the required shift position are unequal to each other (Step A16 YES in Fig. 2). Consequently, a gear position is indicated by "flashing" "3rd" on the display device 43 (see Fig. 1) (Step A17 in Fig. 2). Subsequently, when the clutch pedal is depressed to start shifting, the actual shift position, which is shifting, and the required shift position in 3rd are not equal to each other (Step A16 YES in Fig. 2). Consequently, the gear position is still indicated by "flashing" "3rd" on the display device 43 (see Fig. 1) (Step A17 in Fig. 2). Subsequently, when the shifting is completed, the actual shift position and the required shift position are in 3rd and equal to each other (Step A16 NO in Fig. 2). Consequently, the gear position is indicated by "lighting" "3rd" on the display device 43 (see Fig. 1). Accordingly, the driver is informed of a subsequent shifting gear from when the shift lever is operated to when the clutch pedal is depressed by flashing of a gear position display.

As illustrated in Fig. 7, when the actual shift position and the required shift position are in 2nd and equal to each other (Step A16 NO in Fig. 2), the gear position is indicated by "lighting" "2nd" on the display device 43 (see Fig. 1) (Step A18 in Fig. 2). Subsequently, when the shift lever is operated to "+" (Step A2 YES in Fig. 2) and the required shift position is changed to 3rd (Step A3 in Fig. 2), the actual shift position in 2nd and the required shift position are not equal to each other (Step A16 YES in Fig. 2). Consequently, the gear position is indicated by "flashing" "3rd" on the display device 43 (see Fig. 1) (Step A17 in Fig. 2). Subsequently, when the shift lever is operated to "-" (Step A4 YES in Fig. 2) and the required shift position is changed to 2nd (Step A5 in Fig. 2), the actual shift position and the required shift position are in 2nd and equal to each other (Step A16 NO in Fig. 2). Consequently, the gear position is indicated by "lighting" "2nd" on the display device 43 (see Fig. 1) (Step A 18 in Fig. 2).
Accordingly, when the shift lever is operated to "+" and then operated to "-", the gear position display changes from flashing to lighting and thereby the driver is informed of canceling of shifting.

According to the embodiment, the automated transmission 30 is prevented from being shifted in a state where the automatic clutch 20 is in the engaged state in the manual transmission mode. Therefore, the automated transmission 30 is prevented from being damaged, thereby being protected. Further, according to the embodiment, timing of shifting is determined on the basis of timing of depressing the clutch pedal in the manual transmission mode. Therefore, the driver may surely keep both hands on a steering wheel when shifting. Therefore, driving safety is improved. Specifically, the driver may prepare for shifting when driving straight in front of a curve. Therefore, the driver may keep both hands on the steering wheel while entering and exiting the curve. For example, the following order of operations are required at the time of downshifting for deceleration in front of a curve in a conventional manual transmission: changing from depressing an accelerator pedal to depressing a brake pedal, disengaging a clutch, operating a shift lever, engaging the clutch and changing from depressing the brake pedal to depressing the accelerator pedal. In the embodiment, the following order of operations are required: operating downshifting by means of the shift lever, returning both hands on the steering wheel, changing from depressing the accelerator pedal to depressing the brake pedal, disengaging the clutch, engaging the clutch, and changing from depressing the brake pedal to depressing the accelerator pedal. Accordingly, the driver may keep both hands on the steering wheel at the time of shifting and may concentrate on a brake operation and a clutch operation.

According to the embodiment, even when the depressing amount of the clutch pedal is insufficient during shifting, the clutch actuator stroke is maintained at least at the threshold value during shifting or is controlled to be a clutch disengaged position during shifting, which does not interfere with shifting of the automated transmission 30. Therefore, the automated transmission 30 is protected.

According to the embodiment, it is easy to gently operate a clutch when the vehicle is parked and is driven at the low speed while it is easy to shift quickly when the vehicle is driven at the high speed. For example, when the vehicle is driven at the low speed, a control range of a pedal stroke is determined to be wide so as to be a gentle clutch operation for preventing a backlash from occurring. When the vehicle is driven at the high speed, the clutch pedal stroke required for the clutch disengagement is determined to be shorter because the backlash does not occur even when the clutch is operated roughly. Further, when the vehicle is driven at the high speed, a state where the clutch is disengaged (a state where a rotational torque is not transmitted to driving wheels) is required to be shortened as much as possible and therefore requiring quick shifting. Such requirement may be satisfied.

According to the embodiment, the gear position display is flashed when the actual shift position and the required shift position are unequal to each other. Therefore, the driver may realize that a present gear position and a memorized shifting command are not equal. Accordingly, it is prevented that unprepared shifting occurs when the driver forgets operating the shift lever to memorize shifting and depresses the clutch pedal.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch-by-wire system comprising:
an automatic clutch (20) including a clutch (21) connected to an engine (10) and a clutch actuator (23) operating engagement and disengagement of the clutch (21);
an automated transmission (30) connected to the engine (10) via the clutch (21) and including a shift actuator (34, 35, 36) operating to shift gear stages;
a clutch pedal sensor (41) detecting a depressing amount of a clutch pedal;
a shift sensor (42) detecting an operation of a shift lever; and
a transmission control device (60) automatically controlling an operation of the clutch actuator (23) and an operation of the shift actuator (34, 35, 36) in an automatic transmission mode and controlling the operation of the clutch actuator (23) and the operation of the shift actuator (34, 35, 36) on the basis of signals from at least the clutch pedal sensor (41) and the shift sensor (42) in a manual transmission mode.

2. The clutch-by-wire system according to claim 1, wherein
the transmission control device (60) memorizes an upshift operation or a downshift operation when the shift lever is operated, the transmission control device (60) restricts shifting when a stroke of the clutch actuator (23) is closer to an engaged side than the threshold value and controls the shift actuator (34, 35, 36) to operate shifting in accordance with the memorized operation when the stroke of the clutch actuator (23) is equal to the threshold value or closer to a disengaged side than the threshold value in the manual transmission mode.

3. The clutch-by-wire system according to either claims 1 or 2, wherein
the transmission control device (60) controls the clutch actuator (23) so that the stroke of the clutch actuator (23) is maintained to be a clutch disengaged position of a shifting start time or to a position closer to the disengaged side than the clutch disengaged position of the shifting start time when the automated transmission (30) is shifting in the manual transmission mode.

4. The clutch-by-wire system according to any one of claims 1 - 3 further including
a vehicle state detecting sensor (12, 37) wherein
the transmission control device (60) controls the depressing amount of the clutch pedal corresponding to the threshold value to vary in accordance with the vehicle state detected by the sensor in the manual transmission mode.

5. The clutch-by-wire system according to claim 4, wherein
the vehicle state detecting sensor is at least one of an engine rotational number sensor detecting a rotational number of the engine (10), an accelerator pedal sensor (12) detecting a depressing amount of an accelerator pedal, a vehicle speed sensor detecting a vehicle speed and an output shaft rotational number sensor (37) detecting a rotational number of an output shaft (32) of the automatic transmission (32).

6. The clutch-by-wire system according to either claim 4 or 5, wherein
the transmission control device (60) controls each stroke of the clutch pedal and the clutch actuator (23) so that each entire stroke thereof is used when the vehicle speed is lower than a predetermined value and the transmission control device (60) controls the stroke of the clutch pedal to be shortened when the vehicle speed is equal to or higher than the predetermined value in the manual transmission mode.

7. The clutch-by-wire system according to any one of claims 1 - 6 further including a display device (43) displaying a gear position, wherein
the transmission control device (60) displays on the display device that a required shift position and an actual shift position are not equal (43) when the required shift position, in which an operation of the shift lever is memorized, and the actual shift position of the automated transmission (30) are not equal in the manual transmission mode.

8. The clutch-by-wire system according to claim 7, wherein
the transmission control device (60) indicates the required shift position by flashing on the display device (43) when the required shift position and the actual shift position are not equal in the manual transmission mode.

9. The clutch-by-wire system according to any one of claims 1 - 8, wherein
the automated transmission (30) is one of a parallel axis gear transmission, a planetary gear transmission and a continuously variable transmission.

10. The clutch-by-wire system according to any one of claims 1 - 9, wherein the clutch (21) is one of a dry clutch, an electromagnetic clutch and a wet clutch.

11. The clutch-by-wire system according to claim 2, wherein
the threshold value is a value defining a position corresponding to the clutch actuator stroke at the disengaged side so as not to interfere with shifting of the automated transmission (30).

12. The clutch-by-wire system according to either claims 7 or 8, wherein
the actual shift position is indicated by lighting on the display device (43) when the required shift position and the actual shift position are equal.

13. The clutch-by-wire system according to claim 8, wherein
the required shift position is indicated by flashing on the display device (43) from when a shift operation of the gear stages is started by the shift actuator (34, 35, 36) to when the shift operation of the gear stages to the required shift position is completed.
